# EUROPEAN PATENT APPLICATION

(11) **EP 4 134 302 A1**
(43) Date of publication of application: **15.02.2023**
(21) Application number: 21275111.9
(22) Date of filing: 12.08.2021
(51) Int. Cl.: B64C 39/02, B64D 1/12, B64F 1/06

(54) **COMMUNICATIONS NODE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

There is provided a launchable communications node (100) comprising: an elongate main body (10) having a top end (12) and a bottom end (14), the bottom end comprising a pointed tip (11); a radio transmitter; an antenna; and a power source for powering the radio transmitter. A projectile comprising the communications node (100) and a vehicle (see Fig. 3) having a launcher for stowing and selectively releasing a plurality of communications nodes are also provided.

## Description

### FIELD

The present disclosure relates to a launchable communications node. The present disclosure also relates to a projectile for launching the communications node and an aircraft for deploying a plurality of such communications nodes.

### BACKGROUND

Communications nodes, such as relay nodes, are utilised in a number of markets, including defence. Existing defence systems make use of a set of solutions to achieve communications relay, such as: fixed infrastructure, manned ground vehicles, aircraft (including UAVs), satellites and portable ground infrastructure. The ability of a communications node to remain in a location at an elevation above ground level suitable for effective communications relay is affected by changing weather conditions, uneven surfaces and other environmental factors, along with the changing position of enemy and friendly units.

Deploying mobile communications nodes (i.e. vehicles having the ability to perform the function of a communications node) at the forward edge of a battle area, or even behind enemy lines in advance of special forces deployment, is challenging as the vehicles tend to be easily spotted and compromised. Further, they need a supply line. Communications nodes can be air dropped, but there is a risk they will not land in an optimal location or orientation, and may become damaged when they land. Therefore, there is a need for a single-use communications node that is easily deployable. Further, there is a need to eliminate risk to human life, along with costs associated with long-endurance aerial vehicles and satellite communications.

### SUMMARY

According to an aspect of the present invention, there is provided a launchable communications node comprising:
an elongate main body having a top end and a bottom end, the bottom end comprising a pointed tip;
a radio transmitter;
an antenna; and
a power source for powering the radio transmitter.

Advantageously, the launchable communications node provides a means to deploy and install a communications network to the forward edge of a battle area without exposing operatives or vehicles to danger. Having the pointed tip enables the communications node to embed in the ground or other objects to provide a stable and elevated radio coverage pattern.

The antenna may be disposed on an outside surface of the main body. The antenna may comprise at least one patch antenna fixed to the main body.

The pointed tip may comprise a metal. Preferably, the pointed tip comprises tungsten.

The launchable communications node may comprise a retardation device for controlling the orientation of the communications node in flight. The retardation device may be configured to move from a stowed position to a deployed position in flight. The communications node may comprise an activation device arranged to move the retardation device from the stowed position to the deployed position when the communications node reaches a predetermined altitude. The activation device may comprise an inertial navigation system. The activation device may comprise a processor. The activation device may comprise a switch.

The retardation device may comprise a plurality of rotor blades. Alternatively, the retardation device may comprise a parachute. The rotor blades may be spring-loaded such that on actuation they spring from the stowed position to the deployed configuration and lock in place. Alternatively, the retardation device may comprise a parachute or a planar structure, such as a circular or hexagonal structure.

The power source may comprise at least one photovoltaic cell. The at least one photovoltaic cell may be disposed on an upper surface of the retardation device, for example at least one of the rotor blades. The power source may comprise a battery.

The launchable communications node may comprise a lug disposed at the top end of the main body, wherein the lug is arranged to engage with a deployment mechanism in a vehicle.

The launchable communications node may comprise a shock-absorbing core.

The elongate main body may comprise a first part and a second part, wherein the first part and the second part are slidably coupled, the first part having the pointed tip and the second part having the radio disposed therein and being provided with a biasing means arranged to allow the first part to resiliently slide with respect to the second part.

The biasing means comprises may comprise a coil spring disposed in the first part. Alternatively, the biasing means may comprise a honeycomb structure. Alternatively, the biasing means may comprise a foam.

The communications node may comprise a guidance means and control surfaces for controlling the direction of flight of the communications node. The guidance means may comprise a laser receiver or a satellite navigation system data receiver.

The main body may be telescopic. The main body may be driven to extend by a motor.

The launchable communications node may comprise propellant means. The propellant means may comprise a chemical propellant, jet, an engine or a motor. For example, the propellant means may be a rocket motor or water jet.

According to a second aspect, there is provided a projectile for launching a communications node, the projectile comprising a casing having propellant means and a communications node according to the first aspect disposed therein.

The casing may comprise a plurality of petals arranged to fall away to expose the communications node in flight.

According to a third aspect, there is provided an aircraft comprising a launcher arranged to stow and selectively release a plurality of communications nodes according to the first aspect.

It will be appreciated that features described in relation to one aspect of the present disclosure can be incorporated into other aspects of the present disclosure. For example, an apparatus of the disclosure can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the disclosure will now be described by way of example only and with reference to the accompanying drawings, in which:
Figure 1 is a perspective view of a communications node according to an embodiment, with the airbrake deployed;
Figure 2 is a schematic illustration showing a side view cross-section of a communications node according to an embodiment, with the airbrake deployed; and
Figure 3 is a schematic illustration showing a side view cross-section of an aircraft having a number of stowed communications nodes according to an embodiment.

For convenience and economy, the same reference numerals are used in different figures to label identical or similar elements.

### DETAILED DESCRIPTION

It will be appreciated that relative terms such as horizontal and vertical, top and bottom, above and below, front and back, and so on, are used above merely for ease of reference to the Figures, and these terms are not limiting as such, and any two differing directions or positions and so on may be implemented rather than truly horizontal and vertical, top and bottom, and so on.

Generally, embodiments herein relate to a communications node having a housing designed for ground penetration. The ground may include sand, gravel, mud or clay. Where the communications node impacts the ground with sufficient velocity and its tip is made from a hard metal such as tungsten, the ground may also include rock. The communications node may also be arranged to embed in trees, buildings or foliage. The housing may also comprise a retardation device (i.e. an airbrake) for controlling the orientation of the communications node in flight and/or slowing the descent of the communications node in flight. The design of the housing, namely having the shape of a javelin or spear, is such that a plurality of communications nodes can be packaged efficiently on the same platform. By shaping the housing like a javelin, the descent of the communications node may be accurately controlled, tree cover and foliage may be penetrated and the communications node tends not to slide down sloping land once impact is made.

The communications node may be launched from a gun, missile rail, torpedo tube, or mortar. For example, each communications node may be packaged in a shell casing that falls away from the communications node in flight (i.e. a sabot). Alternatively, the communications nodes may be air-dropped from an aircraft. The communications node may be launched from a launcher on-board the aircraft, such as a sonobuoy launcher.

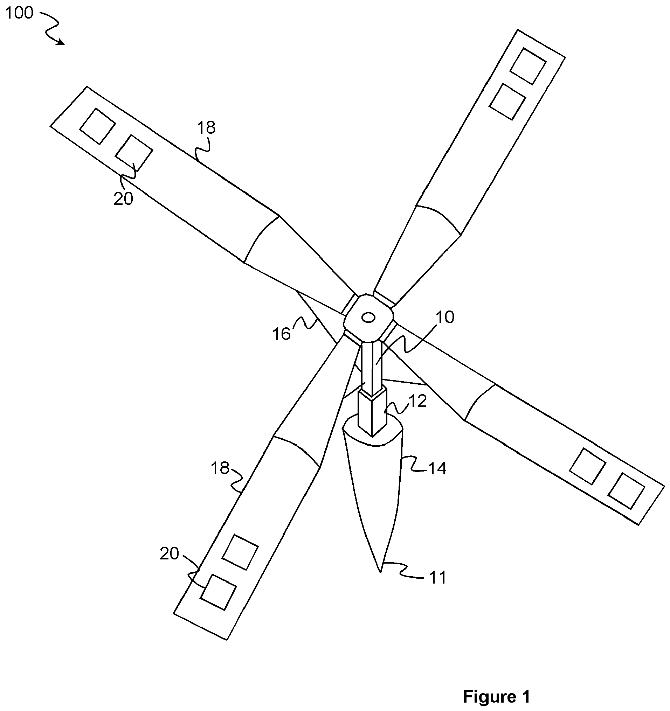

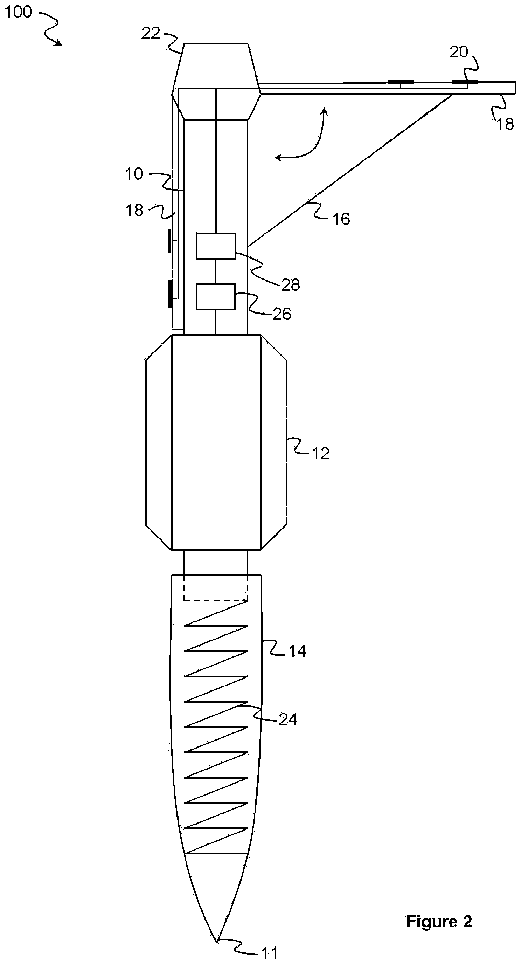

Figure 1 illustrates a communications node 100 in a deployed configuration. The communications node 100 may be a base station, beacon or a relay node (i.e. a repeater). The communications node 100 includes an elongate main body 10. As will be described with reference to Figure 2, the main body 10 houses electronics, such as a radio transmitter, processor and power source. The main body 10 takes the form of a shaft (i.e. the main body 10 is elongate). The main body 10 is generally cylindrical. In other embodiments, the main body 10 may have a polygonal cross-section, such as a hexagonal cross-section. The main body 10 may be about, for example, 1 metre in length.

A spike 14 is attached to the bottom end of the main body 10. The spike 14 and main body 10 may be integrally formed. In other words, the bottom end of the main body 10 may be shaped like a spike such that its lowermost tip 11 forms a point. The spike 14 is made of a dense non-deformable material, such as tungsten or uranium, to allow it to easily penetrate most ground types to a significant extent such that the communications node 100 becomes embedded in and protrudes from the ground.

An antenna 12 is attached to the side surface of the main body 10. The antenna 12 as illustrated takes the form of a plurality of patch antennas forming a 360 degree field of regard around the main body 10. In alternative embodiments, the communications node 100 may be provided with stripline, loop, monopole, dipole or folded antennas. The antenna 12 works best when it has the correct polarisation (i.e. is orientated the designed way up), and the use of the spike 14 facilitates this by ensuring the communications node 100 embeds in the ground tip-down.

In one embodiment, the length of the spike 14 (i.e. distance from the antenna 12 to the pointed tip 11) is selected based on required antenna 12 elevation, ground type and impact velocity (from which penetration depth can be determined). In another embodiment, the main body 10 can be extended in length once the communications node 100 lands. In other words, the main body 10 is telescopic. For example, the main body 10 may be concertinaed and have a motor and drive mechanism disposed therein for increasing the length of the main body 10. This allows the antenna 12 to be extended to an optimal height above ground level regardless of how far the spike 14 penetrates into the ground. Alternatively, the main body 10 may be manually extended by an operator once the operator reaches the area of operation (i.e. the landing point of the communications node 100).

Further, in some embodiments a controller on-board a release platform may be arranged to receive terrain data relating to the intended target point for receiving the communications node 100 (i.e. the intended landing zone). This terrain data indicates the type of ground at the target point. An altitude at which the communications node 100 is to be released can then be determined based on the predicted velocity of the communications node 100 at the time of ground impact and softness of the ground.

An airbrake is attached to the upper end of the main body 10. Here, the airbrake takes the form of a plurality of rotor blades 18. The rotor blades 18 are attached to the main body 10 by a spring-loaded locking member 16. However, in other embodiments the airbrake may take the form of a parachute, planar member, plurality of planar members (i.e. petals), or other structure arranged to oppose the airflow past the communications node 100 in order to control its angle relative to the ground as it descends. Preferably, the tip 11 of the communications node 100 is directed to point towards the ground while in flight, to increase accuracy of deployment. The airbrake may be used to keep the communications node 100 vertical relative to the ground in flight. The airbrake may also be used to slow the descent of the communications node 100 such that the force on impact with the ground does not exceed the force internal components are rated for. Solar panels 20 are attached to the upper surface of the rotor blades 18. The airbrake is jettisonable in some embodiments such that the communications node 100 is less visible to enemy forces on the ground. Here, the solar panels 20 may instead be attached to a side surface of the main body 10. Antennas 12 may also be disposed on the upper surface of the rotor blades 18 to increase the field of regard.

Having the point of impact aligned with the tip 11 of the communications node 100 and the impact force loaded through the centre of gravity of the communications node 100 means a large fraction of the impact force is directed through the tip 11 and no kinetic energy is wasted on lateral loading of the communications node 100 (which could distort or break the javelin on impact).

The rotor blades 18 are designed to fold down in a stowed configuration to enable the communications node 100 to be easily stored. The rotor blades 18 spring outwards, away from the main body 10, when the communications node 100 begins to make its descent. For example, the communications node 100 may comprise an inertial navigation system and a controller for determining the stage of flight of the communications node 100 and for triggering the airbrake deployment. For example, the airbrake deployment may be triggered when the communications node 100 is falling. The controller may alternatively be arranged to trigger the airbrake when the communications node 100 is a predetermined altitude above the ground, or when it has been in flight for a predetermined period of time. The controller, inertial navigation system and any other electronics are disposed inside the main body 10 of the communications node 100. The controller may activate a switch in order to deploy the airbrake. The controller may take any suitable form. For instance, the controller may be a microcontroller, plural microcontrollers, a processor, or plural processors.

Figure 2 shows a systematic view of the communications node 100 according to an embodiment. Here, one of the rotor blades 18 is shown deployed (i.e. arranged relatively perpendicular to the longitudinal axis of the housing 10) while another is in the stowed configuration (i.e. arranged relatively parallel to the longitudinal axis of the housing 10). A lug 22 is attached to the top of the main body 10 for enabling connection with a deployment apparatus, for example on-board an aircraft.

The spike 14, or lower part of the main body 10, comprises a shock absorbing core 24. The spike 14 is coupled to the main body 10 such that they slide with respect to each other. The shock absorbing core 24, as illustrated comprises a coil spring. In other embodiments, the shock absorbing core 24 comprises a compressible material such as a foam, hydraulic dampeners or hydraulic dampeners with assisting metal spring devices. The shock absorbing core 24 may be a crush-type shock absorbing mechanism to reduce complexity and minimise footprint. Where the shook absorbing core 24 is of a crush-type mechanism, the core 24 comprises a material that provides progressive damping and destructive impact absorption. It is a progressively damping, destructive impact absorbing mechanism. The shock absorbing core 24 may take the form of a honeycomb, such as a composite carbon fibre or aluminium honeycomb structure.

In embodiments where the shock absorbing core 24 is of a crush-type, the spike 14 may not slide with respect to the main body 10. Instead, components to be protected from impact may be balanced on the shock absorbing core 24 which compresses on impact, taking the energy out of the fall.

In one embodiment, the communications node 100 is a communications relay node for receiving a signal from a transmitter and transmitting that same signal to a receiver. Here, the main body 10 comprises radio equipment 26. The radio equipment 26 includes a radio transmitter operating on the GSM, CDMA, LTE, WiMax, future 5g standards or the like within the 698-3600MHz spectrum region. The communications node 100 may be for enabling communication (i.e. relaying communications signals) between a satellite and assets (e.g. infantry, naval vessels, aircraft or vehicles), or between assets. In one example, the communications node 100 is for extending the range of control signals between a control station and an unmanned aerial vehicle.

The main body 10 also includes a battery 28 for powering the radio equipment 26 and any other described electronics when sunlight fades.

While the communications node 100 described above is unguided, in other embodiments, the communications node 100 comprises guidance equipment such as GPS or laser receiver, along with actuatable control surfaces.

The electronics described above, i.e. the radio equipment 26, controller, battery 28 etc. are disposed inside the main body 10. By being free-floating relative to the tip 11 by being suspended directly or indirectly on the shock absorbing core 24, they therefore tend not to be damaged when the tip 11 makes contact with the ground.

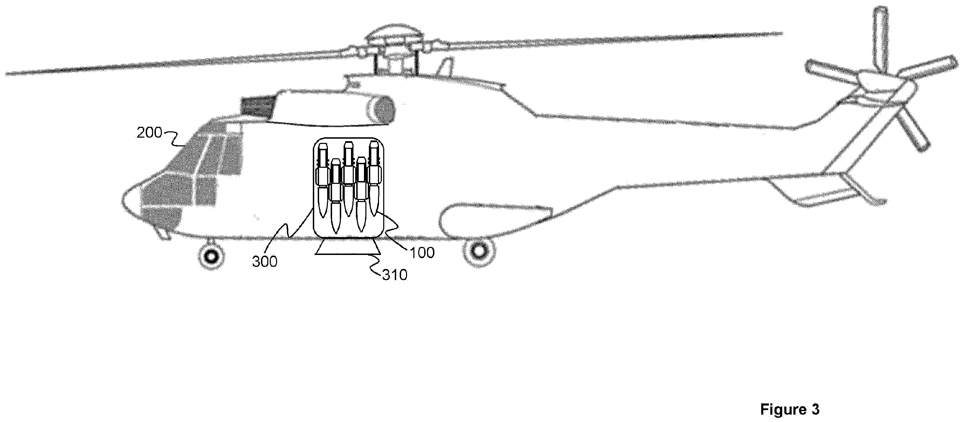

Figure 3 illustrates an aircraft 200 for deploying the communications nodes 100 as described with reference to previous Figures. The aircraft 200 shown here is a helicopter, although it may be any type of aircraft, such as a fixed wing manned or unmanned aircraft, a transport aircraft, or a high altitude long endurance aircraft.

The communications nodes 100 are shown packed in a carousel launcher 300. The body of the aircraft 200 is provided with a door 310 through which the communications nodes 100 can be deployed. Alternatively, the bottom of the aircraft 200 may be provided with uncovered apertures corresponding with the position of the communications nodes 100 in the launcher 300. The ceiling of the carousel launcher 300 may have a plurality of grapples for engaging with the lug 22 on each communications node 100.

Alternatively to the carousel launcher 300, the communications nodes 100 may be dropped horizontally from pylons on the outside of the aircraft 200.

In an alternative embodiment, the communications node 100 may be initially stored and/or launched from a container, such as a shell casing, missile or torpedo. For example, the shell casing may fall away in flight to expose the communications node 100. The container may contain or have a propellant, such as gunpowder or a rocket motor. This is enables the communications node 100 to be launched from a gun, missile launcher, torpedo tube or mortar. As such, instead of being air-deployed, the communications node 100 may be launched from ground vehicles, naval vessels (including submarines) or deployed by infantry.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments. Singular references do not exclude a plurality; thus, references to 'a', 'an', 'first', 'second', etc. do not preclude a plurality.

## Claims

1. A launchable communications node comprising:
an elongate main body having a top end and a bottom end, the bottom end comprising a pointed tip;
a radio transmitter;
an antenna; and
a power source for powering the radio transmitter.

2. The launchable communications node according to claim 1, wherein the antenna comprises at least one patch antenna fixed to an outside surface of the main body.

3. The launchable communications node according to claim 1 or claim 2, wherein the pointed tip comprises tungsten.

4. The launchable communications node according to any one of the preceding claims, comprising a retardation device for controlling the orientation of the communications node in flight.

5. The launchable communications node according to claim 4, wherein the retardation device is configured to move from a stowed position to a deployed position in flight.

6. The launchable communications node according to claim 5, comprising an activation device arranged to move the retardation device from the stowed position to the deployed position when the communications node reaches a predetermined altitude.

7. The launchable communications node according to any one of the preceding claims, wherein the power source comprises at least one photovoltaic cell.

8. The launchable communications node according to claim 7 when dependent on claim 4, wherein the at least one photovoltaic cell is disposed on an upper surface of the retardation device.

9. The launchable communications node according to any one of the preceding claims, wherein the power source comprises a battery.

10. The launchable communications node according to any one of the preceding claims, wherein the elongate main body comprises a first part and a second part, wherein the first part and the second part are slidably coupled, the first part having the pointed tip and the second part having the radio disposed therein and being provided with a biasing means arranged to allow the first part to resiliently slide with respect to the second part.

11. The launchable communications node according to claim 10, wherein the biasing means comprises a coil spring disposed in the first part.

12. The launchable communications node according to any one of the preceding claims, comprising a guidance means and control surfaces for controlling the direction of flight of the communications node.

13. The launchable communications node according to any one of the proceeding claims, comprising propellant means.

14. A projectile for launching a communications node, the projectile comprising a casing having propellant means and a launchable communications node according to any one of claims 1 to 12 disposed therein.

15. An aircraft comprising a launcher arranged to stow and selectively release a plurality of launchable communications nodes according to any one of claims 1 to 13.
